# FASCICULE DE BREVET EUROPEEN

(11) **EP 3 227 955 B1**
(45) Date de publication et mention de la délivrance du brevet: **18.07.2018**
(21) Numéro de dépôt: 15798472.5
(22) Date de dépôt: 25.11.2015
(51) Int. Cl.: H01Q 1/02, H01Q 1/28, H01Q 21/00, G01S 7/03, G01S 13/02, H05K 7/20

(54) **ANTENNE A BALAYAGE ELECTRONIQUE COMPACTE**
KOMPAKTE ELEKTRONISCHE ABTASTANTENNE
COMPACT ELECTRONIC SCANNING ANTENNA

(30) Priorité: 03.12.2014 FR 1402751
(43) Date de publication de la demande: 11.10.2017
(73) Titulaire: Thales, 92400 Courbevoie (FR)
(72) Inventeur: VOUZELAUD, Franck, 75014 Paris (FR); FAUQUEMBERGUE, Jean-Luc, 78851 Elancourt Cedex (FR)
(74) Mandataire: Lucas, Laurent Jacques
(86) Numéro de dépôt international: PCT/EP2015/077584
(87) Numéro de publication internationale: WO 2016/087274

(56) Documents cités:
- WO-A1-2015/009491
- US-A- 5 854 607
- US-B1- 8 654 017

## Description

La présente invention concerne une antenne à balayage électronique, notamment de type tuile. Elle s'applique notamment pour les antennes à balayage électronique soumises à de fortes contraintes d'encombrement.

Les futurs radars à balayage électroniques aéroportés embarqués seront soumis à de fortes contraintes d'encombrement dans le cas d'une architecture de modules Emission/Réception compacte. Cette compacité accrue ainsi que la réduction de masse seront nécessaires pour installer ces radars dans de nouveaux porteurs comme les drones ou pour intégrer de nouvelles fonctionnalités dans la pointe avant, comme par exemple des panneaux multifonctions.
Cette architecture d'antenne compacte dite « tuile » comparée à l'architecture dite « poutre » présente une réduction de l'épaisseur de l'antenne de 2/3. Cette compacité accrue doit cependant préserver un refroidissement correct des modules et nécessite de gagner en compacité sur toutes les fonctions de l'antenne, en particulier sur les circuits d'alimentation. Un problème à résoudre est notamment de simplifier et de rendre plus compacte l'alimentation de puissance des modules d'émission/réception E/R dans une antenne à balayage électronique.
De nombreuses solutions existent pour distribuer l'alimentation de puissance depuis les cartes d'alimentations vers les modules d'émission et de réception. Toutes ces solutions font appel à de la connectique enfichable ou de pression et une distribution par des pistes en cuivre dans une carte ou à l'aide de barres-bus. En général une solution globale combine tous ces éléments.
La barre-bus est un conducteur électrique massif isolé généralement en cuivre rapporté à l'antenne, percé de trous où l'on peut visser des connecteurs destinés à la distribution de puissance vers plusieurs composants électroniques.
Classiquement dans une antenne à balayage électronique, ces barres-bus sont groupées par deux avec une isolation électrique séparant l'alimentation du retour d'alimentation. D'un point de vue fonctionnel ces solutions sont satisfaisantes pour des antennes avec des architectures poutre ou tuile, par contre elles rendent les Circuits Imprimés (CI) plus complexes à fabriquer et les solutions moins compactes et moins accessibles.
Un document US 8 654 017 B1 divulgue une antenne à balayage électronique de type tuile. Un document US 5 854 607 A divulgue un dispositif antennaire.
Un but de l'invention est notamment de simplifier la distribution électrique de puissance dans les antennes à balayage électronique pour améliorer leurs performances de compacité.
A cet effet, l'invention a pour objet une antenne à balayage électronique, de type tuile, comportant au moins une plaque froide servant de structure mécanique principale et un ensemble de modules d'émission et de réception, lesdits modules étant alimentés en puissance électrique par un circuit de distribution de puissance électrique connecté à une source de puissance délivrant une tension d'alimentation, ledit circuit de distribution étant formé de pistes conductrices déposées sur ladite plaque froide et parcourant ladite plaque froide pour atteindre des points de connexions auxdits modules d'émission et de réception.
Dans un mode de réalisation particulier, lesdites pistes conductrices sont déposées par projection plasma.
Dans un mode de réalisation particulier, ladite source de puissance étant opposée audit ensemble de modules par rapport à ladite plaque froide, lesdites pistes conductrices sont déposées sur la face de la plaque froide qui est en regard de la source de puissance, un connecteur étant relié électriquement aux pistes en chaque points de connexion, ledit connecteur traversant ladite plaque froide, chaque module d'émission et de réception comportant un connecteur couplé électriquement avec un connecteur relié auxdites pistes. Ladite plaque froide étant percée de trous pour le passage des connecteurs traversant, des connecteurs aptes à véhiculer des signaux RF traversent par exemple lesdits trous.

Un isolant électrique ayant la même forme que lesdites pistes est par exemple disposé entre ladite plaque froide et lesdites pistes, ledit isolant étant déposé préalablement aux pistes par projection plasma.

Dans un mode de réalisation possible, les pistes comportent au moins deux groupes de pistes, chaque groupe étant composé d'une piste principale reliées à des branches de piste, une piste principale étant portée au potentiel de la tension d'alimentation et une piste principale étant portée au potentiel de masse. Lesdits points de connexion étant placés par rangées, une branche de piste à la tension d'alimentation et une branche de piste au potentiel de masse longent par exemple chaque rangée. La branche de piste à la tension d'alimentation et la branche de piste au potentiel de masse sont par exemple disposées de chaque côté de la rangée. Les pistes au potentiel de masse sont par exemple en parallèle sur une même couche, lesdites pistes étant isolées. Dans un autre mode de réalisation possible, les pistes à la tension d'alimentation et les pistes au potentiel de masse sont superposées, lesdites pistes étant isolées.

Chaque module d'émission et de réception comporte par exemple un nombre pair de modules actifs.

D'autres caractéristiques et avantages de l'invention apparaîtront à l'aide de la description qui suit, faite en regard de dessins annexés qui représentent :
- La figure 1, par une vue éclatée, des éléments d'une antenne « tuile » à balayage électronique ;
- La figure 2, par une vue éclatée, une plaque froide utilisée dans une telle antenne ;
- Les figures 3a et 3b, une illustration du principe de l'invention par un exemple de réalisation ;
- La figure 4, un exemple de sous-ensembles d'émission et de réception équipé de quatre modules actifs ;
- Les figures 5a et 5b, une illustration de la fixation d'un connecteur sur des pistes d'alimentation dans une antenne selon l'invention.

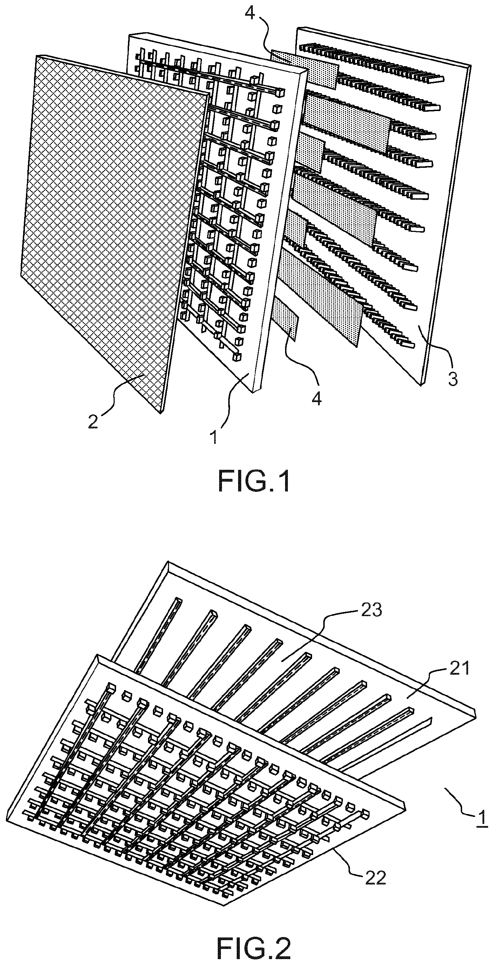

La figure 1 présente par une vue éclatée des éléments d'une antenne « tuile » à balayage électronique compacte dite « tuile », donnée à titre d'exemple. Seuls sont représentés les éléments en relation avec l'alimentation électrique de puissance. Plus particulièrement, la figure 1 présente une plaque froide 1, une platine contenant des modules actifs émission / réception 2 composés de sous-ensembles ou tuiles et un circuit imprimé de commande 3 ainsi qu'un ensemble 4 de distributeurs RF. Les tuiles formant la platine contenant les modules actifs 2 sont fixées directement sur la plaque froide. Cette platine sert de référence mécanique intermédiaire pour la fixation d'éléments non représentés, notamment la structure rayonnante comportant les éléments rayonnants de l'antenne. Cette platine 2 est comporte sur sa face externe des connecteurs RadioFréquences (RF) reliant les tuiles aux éléments rayonnants.
La plaque froide 1 sert de structure principale pour la partie d'antenne, côté émission, dite « Front End ». La plaque 1 sert à fixer les principaux éléments de cette partie « Front End ». Elle est traversée par les connecteurs RF et BF qui sont alignés en rangées afin de faciliter la circulation d'un liquide caloporteur dans la plaque froide.
Les distributeurs RF 4 sont fixés sur l'autre face de la plaque froide, opposée à la partie « Front End ». Ils permettent un découpage de l'antenne en différents secteurs d'émission.
Dans cette configuration classique, la carte de commande 3 distribue aussi des alimentations dont l'alimentation de puissance vers les modules d'émission et de réception E/R de la partie « Front End », par exemple par des barres-bus. Cette carte 3 est fixée directement sur la plaque froide 1.
La tuile comprenant par exemple quatre quadri-modules est fixée directement sur la plaque froide. La tuile est en liaison, d'une part avec les distributeurs RF par l'intermédiaire de connecteurs, et d'autre part avec la carte de commande et d'alimentation 3 par exemple par deux connecteurs BF véhiculant dans une configuration classique les signaux de commande et d'alimentation vers les modules E/R.

La figure 2 présente la plaque froide par une vue éclatée. La plaque froide est en effet composée de deux parties 21, 22 assemblées entre lesquelles circule un liquide de refroidissement, les formes mécaniques de ces parties formant des canaux 23 pour la circulation du liquide.
Cette structure mécanique est en général en aluminium pour avoir de bonnes caractéristiques mécaniques et thermiques. Les parties 21, 22 sont usinées et assemblées par brasage. Une couche de protection contre l'oxydation peut être appliquée par un dépôt de Nickel chimique par exemple.

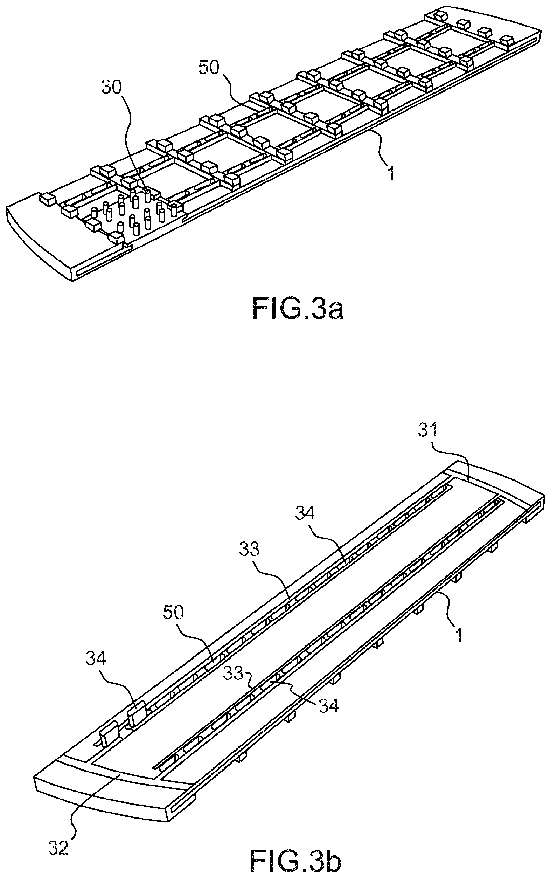

Les figures 3a et 3b illustrent le principe de l'invention à partir d'un extrait de plaque froide 1. La figure 3a présente l'extrait de plaque froide vue du côté « Front End ». Plus particulièrement, elle décrit la façon dont un sous-ensemble d'émission et de réception 30 est reporté sur la plaque froide. Par la suite, on pourra appeler indifféremment ce composant sous-ensemble ou module d'émission et de réception E/R.
Dans cet exemple, le module E/R 30 est par exemple assemblé à la plaque froide par des vis de fixation afin notamment de faciliter son démontage.
La figure 3b présente la face arrière de l'extrait de plaque froide de la figure 3a.
Selon l'invention, des pistes conductrices 31, 32 sont déposées sur la plaque froide afin de créer un circuit de distribution électrique de puissance pour alimenter les modules démission et de réception 30. Les pistes conductrices 31, 32 possèdent par exemple plusieurs ramifications ou branches pour accéder à l'ensemble des modules E/R 30. Elles parcourent la surface de la plaque froide pour atteindre les points de connexions à ces modules E/R. La plaque froide 1 parcourue par les pistes 31, 32 peut être comparée à un circuit imprimé, ayant même fonction qu'un circuit imprimé. Les pistes sont par exemple déposées par projection thermique du type projection plasma. Dans un mode de réalisation préféré, ces pistes sont en cuivre.
Dans l'exemple des figures 3a et 3b, les pistes sont déposées sur la face arrière, opposée aux modules d'émission et de réception 30, en regard du circuit imprimé 30.
Pour alimenter les modules, une piste 31 ou un ensemble de pistes sont portées à la tension d'alimentation, ayant par exemple une valeur de 20V à 30V. Une piste 32 ou un ensemble de pistes sont portées au potentiel de masse ou tout autre potentiel de référence.

Les connecteurs étant par exemple placés en rangées comme indiqué précédemment, pour chaque rangée la piste de masse 32 passe d'un côté 34 de la rangée alors que la piste de tension 31 passe d'un autre côté 33 de la rangée. Il est cependant possible de faire passer les pistes d'un même côté pour réduire les effets de couplage ou encore de la faire passer de façon superposée.
Sur les figures 3a et 3b, les connecteurs ne sont pas représentés, seules les trouées de passage 50 des connecteurs à travers la plaque froide sont représentées.
Dans la configuration présentée en figure 3b, chaque piste est formée d'une voie principale et de branches longeant les rangées de connecteurs. D'autres configurations peuvent cependant être envisagées.
Les pistes de cuivre 31, 32 sont isolées de la plaque froide 1 grâce à un isolant préalablement déposé localement. Cet isolant peut être une céramique ou oxyde d'aluminium déposé par un processus similaire à celui utilisé pour déposer le cuivre. Dans ce cas, l'isolant peut avoir la même forme que les pistes. Il est aussi possible de prévoir un isolant occupant une surface plus large que les pistes conductrices.
Pour limiter les sources de champ magnétique qui pourrait être induit par des surfaces de boucles importantes, la piste d'alimentation 31, portée à la tension d'alimentation, et la piste retour, portée au potentiel de masse, sont par exemple véhiculés soit sur une même couche en mode parallèle ou sur deux niveaux en mode superposé en appliquant le même processus de dépôt que pour la première couche 31, par projection plasma. En mode parallèle ou superposé, les deux pistes 31, 32 sont isolées, par un espace en mode parallèle et par un isolant en mode superposé, l'isolant étant alors par exemple déposé par projection plasma.

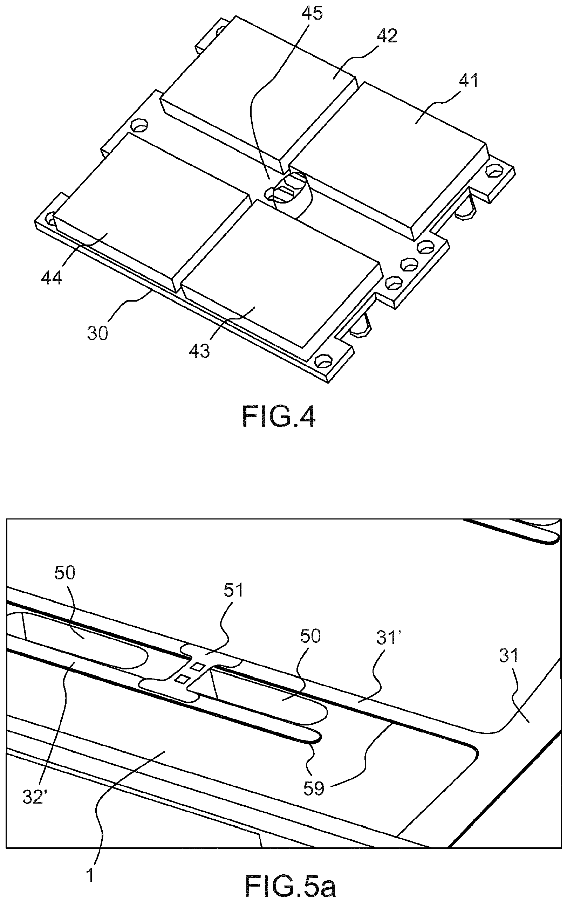

La figure 4 présente un sous-ensemble E/R 30 équipé de quatre modules actifs 41, 42, 43, 44. Pour permettre sa connexion aux pistes 31, 32 d'alimentation de puissance, un connecteur femelle 45, avec un contact enfichable sur le sous-ensemble, est ajouté. Ce type de connecteur peut véhiculer un courant allant jusqu'à 20A par broche. Des contacts de plus forte puissance peuvent être envisagés suivant la consommation des modules.

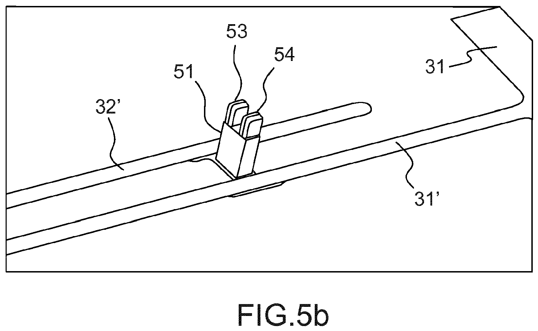

Les figures 5a et 5b illustrent un exemple de fixation du connecteur mâle 51 sur les pistes de cuivre dans le cas où les pistes 31, 32 sont disposées de chaque côté des points de connexion, ce conducteur 51 étant destiné à s'enficher dans le connecteur femelle 45 d'un module E/R.
La figure 5a présente la piste de tension 31 et une de ses branches 31' longeant la rangée de connecteurs. Elle présente également une branche 32' de la piste de masse longeant cette rangée. Un pôle du connecteur 51 est connecté à la piste de tension 31' et l'autre pôle est connecté à la piste de masse 32'. Pour réduire l'encombrement, le connecteur est formé d'un corps équipé des broches de connexion et terminé à son embase par deux languettes perpendiculaires conductrices, les languettes constituant chacune un pôle du connecteur. Ces languettes reposent sur les pistes, assurant la connexion électrique du connecteur avec les pistes.
Le corps du connecteur mâle 51 traverse la plaque froide via une percée 50 afin de pouvoir s'enficher dans le connecteur femelle 45 d'un sous-ensemble E/R 30 tel que présenté en figure 4. Le connecteur mâle 51 peut être fixé sur les pistes par une technique classique de brasage, la fixation se faisant au niveau des languettes. La position du connecteur doit être contrôlée lors de l'assemblage afin que le sous-ensemble 30 des modules E/R s'aligne correctement lors du couplage du connecteur mâle 51 avec le connecteur femelle 45.
La figure 5a montre également que les pistes de cuivre sont reportées sur une couche d'isolant électrique 59.
La figure 5b présente une vue artificielle où seuls le connecteur mâle 51 et les pistes 31, 31' et 32' sont représentés, la plaque froide 1 traversée par le connecteur n'étant pas représentée. Le connecteur mâle 51, fixé sur les pistes 31', 32', a une longueur suffisante pour traverser la plaque froide 1 et venir s'enficher dans le connecteur femelle 45 par ses broches 53, 54.
Les figures 5a et 5b présentent un exemple de connexion où les pistes connectées 31', 32' sont de chaque côté des trous 50, situant les points de connexions. Lorsque les pistes 31', 32' sont sur une même couche en mode parallèle ou sur deux couches en mode superposé, il est possible de prévoir un autre type de connexion. Le connecteur utilisé comporte toujours un corps apte à traverser la plaque froide et s'enficher dans un connecteur femelle, mais ses terminaisons sont adaptées pour être reliées électriquement aux deux pistes, parallèles ou superposées. Dans le cas de pistes superposées il est possible de prévoir une excroissance locale de la piste inférieure pour permettre une liaison électrique avec le connecteur. La projection par plasma permet avantageusement de réaliser ce type d'excroissance.
Il y a autant de connecteurs mâles 51 que de sous-ensembles ou de modules d'émission et de réception à alimenter. Ces conducteurs complètent le circuit d'alimentation de ces modules. Ils pourraient être remplacés par des connecteurs femelles, les connecteurs mâles étant alors fixés sur les sous-ensembles d'émission et de réception.
Les connecteurs de puissance 51, 45 peuvent voisiner avec des connecteurs RF et de commande. La figure 3b présente de tels connecteurs 34 traversant également la plaque froide 1.

Des connecteurs non représentés sont prévus pour connecter les pistes conductrices 31, 32 à la source de puissance qui peut être placée par exemple sur le circuit de commande et d'alimentation 3, sous forme d'un ou plusieurs modules d'alimentation par exemple. Ces connecteurs peuvent être brasés directement sur les pistes ou inversement recevoir des connecteurs par pression de façon classique. La source de puissance des pistes 31, 32 peut être placée à un autre endroit. Plus généralement, on considère comme source de puissance tout point d'amenée de puissance ou de courant à l'entrée des pistes.

L'invention permet avantageusement d'améliorer les performances de compacité des antennes à balayage électronique de type tuile. En particulier, elle ne fait pas appel à des fixations mécaniques comme des vis d'assemblage. Elle permet de véhiculer de forte puissance tout en minimisant les pertes en ligne, l'échauffement des contacts étant réduit par l'influence de la plaque froide servant à drainer efficacement les calories dissipées par effet joule. Les couplages magnétiques et inductifs sont minimisés. Des éléments de filtrage ou de capacité réservoir peuvent être facilement adaptés et connectés au dispositif d'alimentation. La puissance peut être transmise par une seule broche aller et retour pour un groupement de modules, comme illustré sur les figures 4, 5a et 5b.

L'invention a également comme avantage que, utilisant une projection plasma, elle permet d'obtenir des formes variées de pistes, capables de s'adapter à toutes les configurations, et en particulier de contourner facilement des obstacles tels que des protubérances, des colonnettes de fixation, ou des cavités notamment et potentiellement sur différents niveaux. La projection par plasma permet également de créer localement des formes particulières de pistes adaptées aux différents types de connexions utilisés.

## Revendications

1. Antenne à balayage électronique, de type tuile, comportant au moins une plaque froide (1) servant de structure mécanique principale et un ensemble de modules d'émission et de réception (30), lesdits modules étant alimentés en puissance électrique par un circuit de distribution de puissance électrique connecté à une source de puissance délivrant une tension d'alimentation, **caractérisé en ce que** ledit circuit de distribution est formé de pistes conductrices (31, 32) déposées sur ladite plaque froide (1) et parcourant ladite plaque froide pour atteindre des points de connexions (50) auxdits modules d'émission et de réception (30).

2. Antenne selon la revendication 1, **caractérisé en ce que** lesdites pistes conductrices (31,32) sont déposées par projection plasma.

3. Antenne selon l'une quelconque des revendications précédentes, **caractérisée** ladite source de puissance étant opposée audit ensemble de modules (30) par rapport à ladite plaque froide (1), lesdites pistes conductrices (31, 32) sont déposées sur la face de la plaque froide (1) qui est en regard de la source de puissance, un connecteur (51) étant relié électriquement aux pistes (31, 32) en chaque points de connexion, ledit connecteur (51) traversant ladite plaque froide (1), chaque module d'émission et de réception (30) comportant un connecteur (45) couplé électriquement avec un connecteur (51) relié auxdites pistes.

4. Antenne selon la revendication 3, **caractérisé en ce que** ladite plaque froide (1) étant percée de trous (50) pour le passage des connecteurs traversant (51), des connecteurs aptes à véhiculer des signaux RF traversent lesdits trous.

5. Antenne selon l'une quelconque des revendications précédentes, **caractérisé en ce qu'**un isolant électrique (59) ayant la même forme que lesdites pistes (31, 32) est disposé entre ladite plaque froide (1) et lesdites pistes (31, 32), ledit isolant étant déposé préalablement aux pistes par projection plasma.

6. Antenne selon l'une quelconque des revendications précédentes, **caractérisé en ce que** lesdites pistes (31, 32) comportent au moins deux groupes de pistes, chaque groupe étant composé d'une piste principale reliées à des branches de piste (31', 32'), une piste principale étant portée au potentiel de la tension d'alimentation et une piste principale étant portée au potentiel de masse.

7. Antenne selon la revendication 6, **caractérisé en ce que** lesdits points de connexion (51) étant placés par rangées, une branche de piste (31') à la tension d'alimentation et une branche de piste (32') au potentiel de masse longent chaque rangée.

8. Antenne selon la revendication 7, **caractérisé en ce que** la branche de piste (31') à la tension d'alimentation et la branche de piste (32') au potentiel de masse (32') sont disposées de chaque côté (33, 34) de la rangée.

9. Antenne selon l'une quelconque des revendications 6 ou 7, **caractérisé en ce que** les pistes (31, 31') à la tension d'alimentation et les pistes (32, 32') au potentiel de masse sont en parallèle sur une même couche, lesdites pistes étant isolées.

10. Antenne selon l'une quelconque des revendications 6 ou 7, **caractérisé en ce que** les pistes (31, 31') à la tension d'alimentation et les pistes (32, 32') au potentiel de masse sont superposées, lesdites pistes étant isolées.

11. Antenne selon l'une quelconque des revendications précédentes, **caractérisé en ce que** chaque module d'émission et de réception (30) comporte un nombre pair de modules actifs (41,42, 43, 44).

12. Antenne selon l'une quelconque des revendications précédentes, **caractérisé en ce que** les pistes (31, 32) sont en cuivre.

## Patentansprüche

1. Elektronische Abtastantenne des Dachziegeltyps, umfassend wenigstens eine kalte Platte (1), die als mechanische Hauptstruktur dient, und einen Satz von Sende- und Empfangsmodulen (30), wobei die Module von einer Stromverteilungsschaltung, die mit einer eine Speisespannung liefernden Stromquelle verbunden ist, mit Strom versorgt werden, **dadurch gekennzeichnet, dass** die Verteilungsschaltung von Leiterbahnen (31, 32) gebildet wird, die auf der kalten Platte (1) angeordnet sind und durch die kalte Platte verlaufen, um Verbindungspunkte (50) zu den Sende- und Empfangsmodulen (30) zu erreichen.

2. Antenne nach Anspruch 1, **dadurch gekennzeichnet, dass** die Leiterbahnen (31, 32) durch Plasmaprojektion aufgebracht sind.

3. Antenne nach einem der vorherigen Ansprüche, **dadurch gekennzeichnet, dass** sich die Stromquelle gegenüber dem Modulsatz (30) in Bezug auf die kalte Platte (1) befindet, wobei die Leiterbahnen (31, 32) auf der Fläche der kalten Platte (1) angeordnet sind, die sich gegenüber der Stromquelle befindet, wobei ein Verbinder (51) elektrisch mit den Bahnen (31, 32) an jedem Verbindungspunkt verbunden ist, wobei der Verbinder (51) die kalte Platte (1) durchquert, wobei jedes Sende- und Empfangsmodul (30) einen Verbinder (45) umfasst, der elektrisch mit einem mit den Bahnen verbundenen Verbinder (51) gekoppelt ist.

4. Antenne nach Anspruch 3, **dadurch gekennzeichnet, dass** die kalte Platte (1) mit Löchern (50) für die Passage der durchgehenden Verbinder (51) durchbohrt ist, wobei die Verbinder die Löcher durchquerende RF-Signale befördern können.

5. Antenne nach einem der vorherigen Ansprüche, **dadurch gekennzeichnet, dass** ein elektrischer Isolator (59) mit derselben Form wie die Bahnen (31, 32) zwischen der kalten Platte (1) und den Bahnen (31, 32) angeordnet ist, wobei der Isolator vor den Bahnen durch Plasmaprojektion aufgebracht wird.

6. Antenne nach einem der vorherigen Ansprüche, **dadurch gekennzeichnet, dass** die Bahnen (31, 32) wenigstens zwei Bahnengruppen umfassen, wobei jede Gruppe von einer mit Bahnzweigen (31', 32') verbundenen Hauptbahn zusammengesetzt ist, wobei eine Hauptbahn auf das Potential der Speisespannung gebracht wird und eine Hauptbahn auf das Massepotential gebracht wird.

7. Antenne nach Anspruch 6, **dadurch gekennzeichnet, dass** die Verbindungspunkte (51) nach Reihen platziert sind, wobei ein Bahnzweig (31') auf der Speisespannung und ein Bahnzweig (32') auf Massepotential entlang jeder Reihe verlaufen.

8. Antenne nach Anspruch 7, **dadurch gekennzeichnet, dass** der Bahnzweig (31') auf der Speisespannung und der Bahnzweig (32') auf dem Massepotential (32') auf jeder Seite (33, 34) der Reihe angeordnet sind.

9. Antenne nach einem der Ansprüche 6 oder 7, **dadurch gekennzeichnet, dass** die Bahnen (31, 31') auf der Speisespannung und die Bahnen (32, 32') auf dem Massepotential auf einer selben Schicht parallel sind, wobei die Bahnen isoliert sind.

10. Antenne nach einem der Ansprüche 6 oder 7, **dadurch gekennzeichnet, dass** die Bahnen (31, 31') auf der Speisespannung und die Bahnen (32, 32') auf dem Massepotential übereinander liegen, wobei die Bahnen isoliert sind.

11. Antenne nach einem der vorherigen Ansprüche, **dadurch gekennzeichnet, dass** jedes Sende- und Empfangsmodul (30) eine gerade Anzahl von aktiven Modulen (41, 42, 43, 44) umfasst.

12. Antenne nach einem der vorherigen Ansprüche, **dadurch gekennzeichnet, dass** die Bahnen (31, 32) aus Kupfer sind.

## Claims

1. An electronic scanning antenna, of tile type, comprising at least one cold plate (1) serving as main mechanical structure and a set of transmission and reception modules (30), said modules being supplied with electrical power by an electrical power distribution circuit connected to a power source delivering a power supply voltage, **characterized in that** said distribution circuit is formed by conductive tracks (31, 32) deposited on said cold plate (1) and crossing said cold plate to reach connection points (50) to said transmission and reception modules (30).

2. The antenna as claimed in claim 1, **characterized in that** said conductive tracks (31, 32) are deposited by plasma spraying.

3. The antenna as claimed in any one of the preceding claims, **characterized in that**, said power source being opposite said set of modules (30) relative to said cold plate (1), said conductive tracks (31, 32) are deposited on the face of the cold plate (1) which is facing the power source, a connector (51) being electrically linked to the tracks (31, 32) at each connection point, said connector (51) passing through said cold plate (1), each transmission and reception module (30) comprising a connector (45) electrically coupled with a connector (51) linked to said tracks.

4. The antenna as claimed in claim 3, **characterized in that**, said cold plate (1) being pierced with holes (50) for the passage of the through connectors (51), connectors capable of conveying RF signals pass through said holes.

5. The antenna as claimed in any one of the preceding claims, **characterized in that** an electrical insulation (59) having the same form as said tracks (31, 32) is arranged between said cold plate (1) and said tracks (31, 32), said insulation being deposited prior to the tracks by plasma spraying.

6. The antenna as claimed in any one of the preceding claims, **characterized in that** said tracks (31, 32) comprise at least two groups of tracks, each group being made up of a main track linked to track branches (31', 32'), one main track being brought to the potential of the power supply voltage and one main track being brought to the ground potential.

7. The antenna as claimed in claim 6, **characterized in that**, said connection points (51) being placed in rows, one track branch (31') at the power supply voltage and one track branch (32') at the ground potential run along each row.

8. The antenna as claimed in claim 7, **characterized in that** the track branch (31') at the power supply voltage and the track branch (32') at the ground potential (32') are arranged on each side (33, 34) of the row.

9. The antenna as claimed in either one of claims 6 or 7, **characterized in that** the tracks (31, 31') at the power supply voltage and the tracks (32, 32') at the ground potential are in parallel on one and the same layer, said tracks being insulated.

10. The antenna as claimed in either one of claims 6 or 7, **characterized in that** the tracks (31, 31') at the power supply voltage and the tracks (32, 32') at the ground potential are superposed, said tracks being insulated.

11. The antenna as claimed in any one of the preceding claims, **characterized in that** each transmission and reception module (30) comprises an even number of active modules (41, 42, 43, 44).

12. The antenna as claimed in any one of the preceding claims, **characterized in that** the tracks (31, 32) are made of copper.
